# EUROPEAN PATENT SPECIFICATION

(11) **EP 0 563 762 B1**
(45) Date of publication and mention of the grant of the patent: **18.12.1996**
(21) Application number: 93104800.3
(22) Date of filing: 23.03.1993
(51) Int. Cl.: G01C 19/56

(54) **Vibratory gyroscope with piezoelectric elements in vicinities of nodal points**
Schwingkreisel mit Piezoelementen in Schwingungsknotennähe
Gyroscope vibrateur dont les éléments piézoélectriques se trouvent près noeuds vibratoires

(30) Priority: 30.03.1992 JP 105540/92
(43) Date of publication of application: 06.10.1993
(73) Proprietor: MURATA MANUFACTURING CO., LTD., Nagaokakyo-shi Kyoto-fu 226 (JP)
(72) Inventor: Fujimoto, Katsumi, c/o Murata, Nagaokakyo-shi, Kyoto-fu (JP); Yoshitani, Kazuhiro, c/o Murata, Nagaokakyo-shi Kyoto-fu (JP)
(74) Representative: Schoppe, Fritz, Dipl.-Ing.

(56) References cited:
- DE-A- 3 926 504
- GB-A- 2 111 209
- US-A- 4 836 023
- PATENT ABSTRACTS OF JAPAN vol. 9, no. 165 (E-327)10 July 1985 & JP-A-60 039 911 ( TOUYOU TSUUSHINKI ).

## Description

### BACKGROUND OF THE INVENTION

### Field of the Invention

This invention relates to a vibratory gyroscope and, more particularly, to the vibratory gyroscope that is applied to a navigation system which detects a position of a mobile by detecting its angular velocity and guides it properly, or to a yaw rate sensor which detects external vibration for the purpose of properly damping it.

### Description of the Prior Art

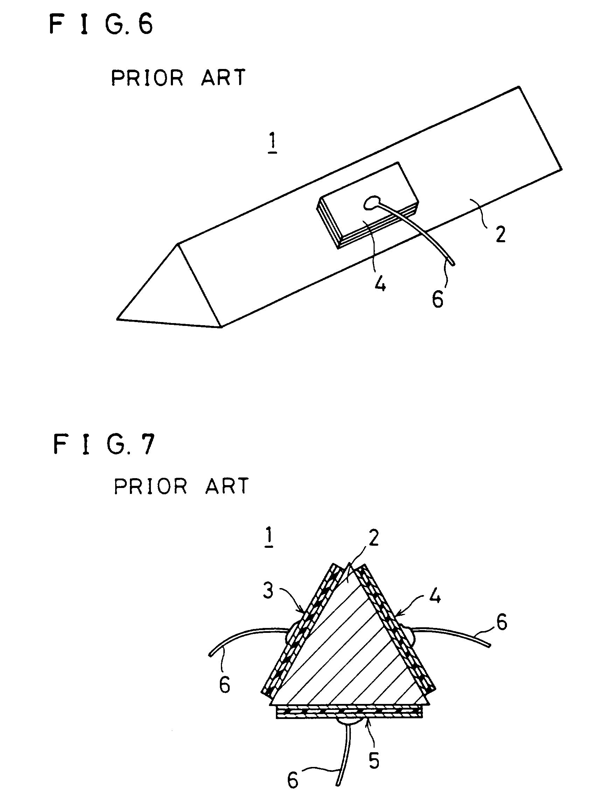

Fig. 6 is a perspective view showing a conventional vibratory gyroscope in the background of the invention, and Fig. 7 is its sectional view. The vibratory gyroscope 1 includes a vibrator 2. The vibrator 2 is formed into regular triangular prism shape with a constant elastic metal material. On the side faces of the vibrator 2, piezoelectric elements 3, 4 and 5 are formed respectively. The piezoelectric elements 3, 4 and 5 are made by forming electrodes on both faces of, for example, a piezoelectric ceramic plate. Then, these piezoelectric elements 3, 4 and 5 are bonded on the side faces of the vibrator 2. The two piezoelectric elements 3 and 4 are used for driving and for detecting an output signal. Another piezoelectric element 5 is used for feedback. Lead wires 6 are connected to the center portions of these piezoelectric elements 3, 4 and 5 respectively.

In the vibratory gyroscope 1, between piezoelectric elements 3, 4 for driving and the piezoelectric element 5 for feedback, an oscillation circuit is connected as a feedback loop for self-drive. The vibrator 2 makes a bending vibration taking its two nodal points as centers in the direction orthogonal to the face whereon the piezoelectric element 5 for feedback is formed, in response to the signal from the oscillation circuit. In this state, when the vibratory gyroscope 1 rotates, a difference is produced between the output voltages of the two piezoelectric elements 3 and 4 for detecting the output signal, and a rotational angular velocity can be detected by measuring the voltage difference. The oscillation circuit and a circuit for processing the output signal are connected to the piezoelectric elements 3, 4 and 5 via the lead wires 6.

In a vibratory gyroscope, the vibrator 2 makes a bending vibration taking its two nodal points as centers. Assuming a length of the vibrator is L, the nodal points of the vibrator are at points 0.224L apart from its both ends on the center line. Therefore, the vibrator has a large amplitude in its center portion when it makes a bending vibration. Thus, the lead wire connected to the center of the piezoelectric element vibrates with a large amplitude, in response to the bending vibration of the vibrator. In such a state, the vibration of the vibrator leaks from the lead wire, and thus the characteristic of the vibratory gyroscope becomes unstable. Furthermore, since the connecting portions of the vibrator and the lead wires vibrates with a large amplitude, there is an anxiety in durability of the connection, and there is the possiblity of the lead wire coming off.

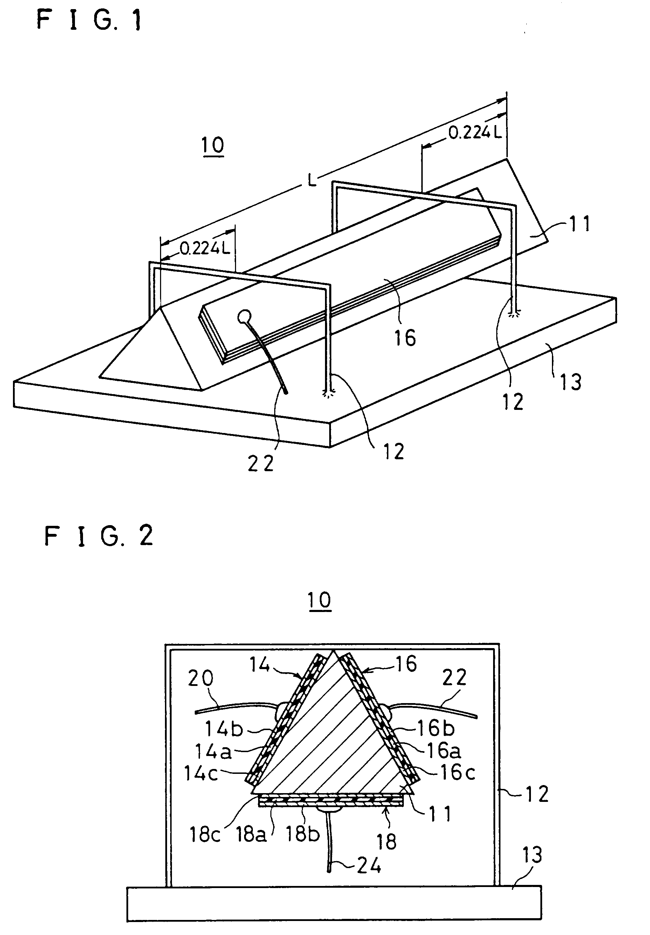

The document US-A-4,836,023 discloses a vibrational angular rate sensor having a vibrator formed in a square pillar shape. As shown in Figures 1A to 1C of the document, a pair of driving piezoelectric elements and a pair of sensing piezoelectric elements are attached to each side surface of the vibrator. The driving piezoelectric elements and the sensing piezoelectric elements are connected to external circuit via electrodes 4A,4B;5A,5B through four fine conductive wires. The element electrodes extend from the respective piezoelectric elements to positions arranged in the vicinity of nodal positions of the vibrator. The four fine conductive wires are arranged near the vibration nodes.

### SUMMARY OF THE INVENTION

The principal object of the present invention is to provide a vibratory gyroscope which has a little vibration leakage and high reliable durability of a lead wire connection.

The present invention is a vibratory gyroscope comprising a prism shaped vibrator; a piezoelectric element formed on a side face of said vibrator, said piezoelectric element comprising a piezoelectric body and inner and outer electrodes arranged on an inner and an outer main surface of said piezoelectric body, respectively; a lead wire connected to said piezoelectric element; wherein said piezoelectric element is so formed that it extends to portions of the side face of said vibrator located closest to the nodal points of said vibrator; and said lead wire is connected to said outer electrode of said piezoelectric element adjacent to said portion of the side face of said vibrator located closest to the nodal point of said vibrator.

Furthermore, the present invention is a vibratory gyroscope comprising a prism shaped vibrator made of piezoelectric ceramic; an electrode formed on a side face of said vibrator; and a lead wire connected to said electrode; wherein said electrode is so formed that it extends to portions of the side face of said vibrator located closest to the nodal points of said vibrator; and said lead wire is connected to said electrode adjacent to said portion of the side face of said vibrator located closest to the nodal point of said vibrator.

Since the lead wire is connected to the piezoelectric element or the electrode in the vicinity of the nodal point of the vibrator, the connecting portion of the piezoelectric element or the electrode and the lead wire scarcely vibrates.

According to the invention, because the connecting portion of the piezoelectric element or the electrode and the lead wire scarcely vibrates, the bending vibration of the vibrator hardly leaks from the lead wire. Thus, the characteristic of the vibratory gyroscope is stabilized, thereby enabling to correctly measure a rotational angular velocity. Furthermore, because the connecting portion of the piezoelectric element or the electrode and the lead wire scarcely vibrates, the lead wire hardly comes off from the piezoelectric element or the electrode.

The above objects, features, aspects and advantages of the invention will be more fully apparent from the following detailed description with the accompanying drawings.

### BRIEF DESCRIPTION OF THE DRAWINGS

Fig. 1 is a perspective view showing one embodiment of the invention.

Fig. 2 is a sectional view showing the vibratory gyroscope of Fig. 1.

Fig. 3 is an illustrative view showing a state of bending vibration of the vibratory gyroscope of Fig. 1.

Fig. 4 is a perspective view showing another embodiment of the invention.

Fig. 5 is a sectional view showing a vibratory gyroscope of Fig. 4.

Fig. 6 is a perspective view showing one example of conventional vibratory gyroscope.

Fig. 7 is a sectional view showing the conventional vibratory gyroscope of Fig. 6.

### DESCRIPTION OF THE PREFERRED EMBODIMENTS

Fig. 1 is a perspective view showing one embodiment of the present invention, and Fig. 2 is its sectional view. The vibratory gyroscope 10 includes a vibrator 11. The vibrator 11 is formed into, for example, a regular triangular prism shape with a constant elastic metal material. On a ridge line near the nodal points of the vibrator 11, wire shaped holding members 12 are mounted. The vibrator 11 is held above a base plate 13 by these holding members 12. Assuming a length of the vibrator 11 is L, the nodal points of the vibrator 11 are at points 0.224L apart from its both ends on the center line. Therefore, the holding members 12 are connected at positions 0.224L apart from both ends of the vibrator 11 on the ridge line.

On the side faces of the vibrator 11, piezoelectric elements 14, 16 and 18 are formed respectively. The piezoelectric element 14 includes, for example, a piezoelectric body 14a, on both sides of which electrodes 14b and 14c are formed. And one electrode 14c is bonded to the side face of the vibrator 11. Similarly, the piezoelectric elements 16 and 18 include respectively piezoelectric bodies 16a and 18a, on both sides of which electrodes 16b, 16c and electrodes 18b, 18c are formed respectively. And one electrode 16c and one electrode 18c are bonded to the side faces of the vibrator 11.

These piezoelectric elements 14, 16 and 18 are so formed that they extend to the vicinities of the two nodal points of the vibrator 11. That is, piezoelectric elements 14, 16 and 18 are so formed that they cover the portions 0.224L apart from both ends of the respective side faces of the vibrator 11. And lead wires 20, 22 and 24 are connected to the portions of the piezoelectric elements 14, 16 and 18 which are 0.224L apart from both ends of the vibrator 11. These lead wires 20, 22 and 24 are bonded to the piezoelectric elements 14, 16 and 18 respectively with solder or elastic adhesive. In the vibratory gyroscope 10, the two piezoelectric elements 14 and 16 are used for driving and for detecting output signal, and other piezoelectric element 18 is used for feedback.

In the vibratory gyroscope 10, an oscillation circuit as a feedback loop for self-drive is connected between the piezoelectric elements 14, 16 used for driving and the piezoelectric element 18 used for feedback. Therefore, the vibrator 11 makes the bending vibration in the direction orthogonal to the face whereon the piezoelectric element 18 for feedback is formed, in response to a signal from the oscillation circuit.

In this state, when the vibratory gyroscope 10 rotates on its axis, the direction of vibration of the vibrator 11 changes by the Coriolis force, and a difference is produced between voltages generated in the piezoelectric elements 14 and 16 for detecting the output signal. Therefore, when detecting the difference between the output voltages of these piezoelectric elements 14 and 16, the large value of output can be obtained. By measuring this output, a rotational angular velocity applied to the vibratory gyroscope 10 can be detected. The oscillation circuit and an output voltage processing circuit are connected to the piezoelectric elements 14, 16 and 18 via the lead wires 20, 22 and 24 respectively.

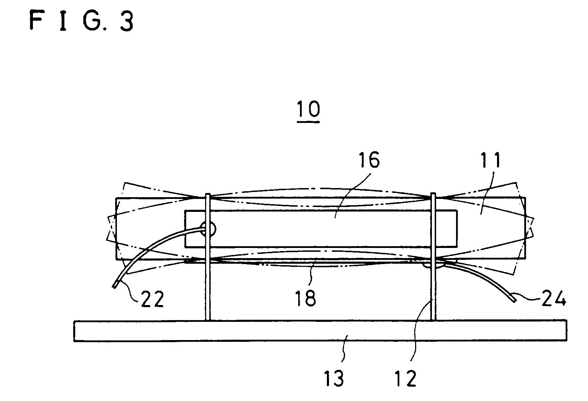

As shown in Fig. 3, when the vibrator 11 of the vibratory gyroscope 10 makes the bending vibration, it performs the bending vibration taking its two nodal points as centers. And, the lead wires 20, 22 and 24 are connected to the piezoelectric elements 14, 16 and 18 in the vicinities of the nodal points of the vibrator 11, therefore the connecting portions scarcely vibrate. Thus, the vibration of the vibrator 11 is hard to leak from the lead wires 20, 22 and 24, and the characteristic of the vibratory gyroscope 10 becomes stable. Thus, the rotational angular velocity applied to the vibratory gyroscope 10 can be correctly measured.

In addition, the connecting portions of the piezoelectric elements 14, 16 and 18 and the lead wires 20, 22 and 24 scarcely vibrate, thereby soldered portions scarcely come off and durability of the connections is good.

Furthermore, the shape of the vibrator 11 is not limited to a regular triangular prism shape, but may be other prism shape such as a quadrangular prism shape. Furthermore, the vibrator 11 may be made the bending vibration by using only the two piezoelectric elements 14 and 16 without forming the piezoelectric element 18 for feedback. In such way, a number of the piezoelectric elements may be increased or decreased optionally.

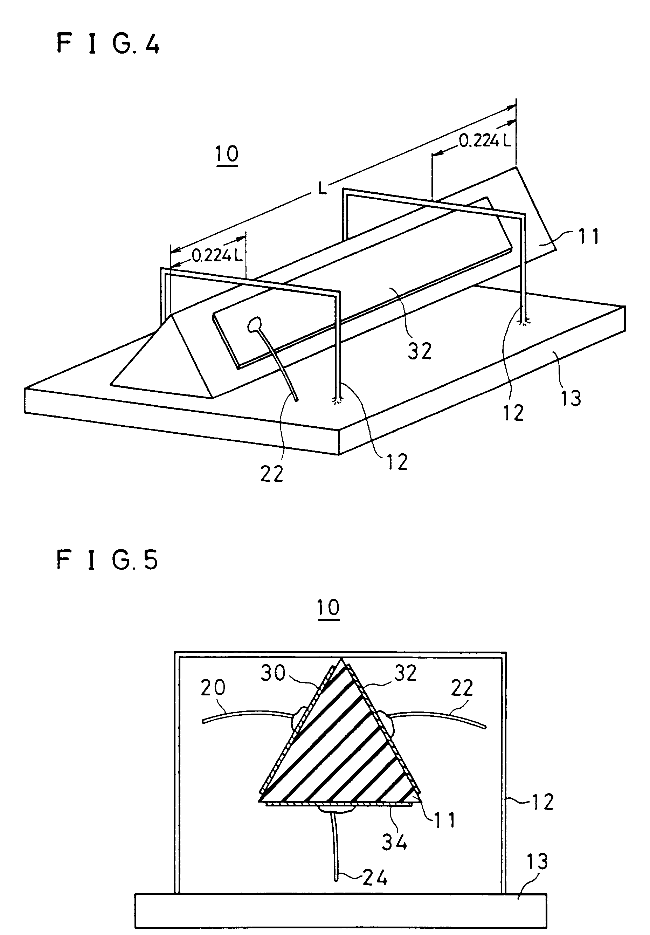

As shown in Figs. 4 and 5, a vibrator 11 may be formed of piezoelectric ceramics. In this case, electrodes 30, 32 and 34 are formed on the side faces of the vibrator 11. These electrodes 30, 32 and 34 are also so formed that they extend to the vicinities of the nodal points of the vibrator 11 in the same way as the piezoelectric elements of the above embodiment. The vibrator 11 is polarized in the direction, for example, orthogonal to the face whereon the electrode 34 is formed. And lead wires 20, 22 and 24 are connected to the three electrodes 30, 32 and 34 in the vicinities of the nodal points of the vibrator 11. That is, assuming a length of the vibrator 11 is L, the lead wires 20, 22 and 24 are connected at positions 0.224L apart from both ends of the vibrator 11.

In such a vibratory gyroscope 10 also, it is possible to make the vibrator 11 perform the bending vibration by connecting an oscillation circuit between the electrodes 30, 32 and the electrode 34. And, a rotational angular velocity can be detected by measuring a difference between the output voltages of the electrodes 30 and 32.

In this vibratory gyroscope 10 also, since the lead wires 20, 22 and 24 are connected in the vicinities of the nodal points of the vibratior 11, the connecting portions scarcely vibrate. Therefore, the vibration of the vibrator 11 is hard to leak to the lead wires 20, 22 and 24, and this enables to stabilize the characteristic of the vibratory gyroscope 10. Furthermore, the connections of the lead wires 20, 22 and 24 scarcely come off, and durability of the connection is good.

In such a vibratory gyroscope 10 also, a form of the vibrator and a number of the electrodes may be changed optionally.

It will be apparent from the foregoing that, while the present invention has been described in detail and illustrated, these are only particular illustrations and examples and the invention is not limited to these. The scope of the invention is limited only by the appended claims.

## Claims

1. A vibratory gyroscope (10) comprising:
a prism shaped vibrator (11);
a piezoelectric element (14, 16, 18) formed on a side face of said vibrator (11), said piezoelectric element (14, 16, 18) comprising a piezoelectric body (14a, 16a, 18a) and inner and outer electrodes (14b, 14c, 16b, 16c, 18b, 18c) arranged on an inner and an outer main surface of said piezoelectric body (14a, 16a, 18a), respectively;
a lead wire (20, 22, 24) connected to said piezoelectric element (14, 16, 18);
wherein said piezoelectric element (14, 16, 18) is so formed that it extends to portions of the side face of said vibrator (11) located closest to the nodal points of said vibrator (11); and
said lead wire (20, 22, 24) is connected to said outer electrode (14b, 16b, 18b) of said piezoelectric element (14, 16, 18) adjacent to said portion of the side face of said vibrator (11) located closest to the nodal point of said vibrator (11).

2. A vibratory gyroscope (10) according to claim 1, wherein said vibrator (11) is formed into a regular triangular prism shape.

3. A vibratory gyroscope (10) according to claim 2, wherein assuming a length of said vibrator (11) is L, said lead wire is connected at a position 0,224 L apart from an end of said vibrator (11).

4. A vibratory gyroscope (10) comprising:
a prism shaped vibrator (11) made of piezoelectric ceramic;
an electrode (14b,c; 16b,c; 18b,c) formed on a side face of said vibrator (11); and
a lead wire (20, 22, 24) connected to said electrode (14b,c; 16b,c; 18b,c);
wherein said electrode (14b,c; 16b,c; 18b,c) is so formed that it extends to portions of the side face of said vibrator (11) located closest to the nodal points of said vibrator (11); and
said lead wire (20, 22, 24) is connected to said electrode (14b,c; 16b,c; 18b,c) adjacent to said portion of the side face of said vibrator (11) located closest to the nodal point of said vibrator (11).

5. A vibratory gyroscope (10) according to claim 4, wherein said vibrator (11) is formed into a regular triangular prism shape.

6. A vibratory gyroscope (10) according to claim 5, wherein assuming a length of said vibrator (11) is L, said lead wire is connected at a position 0,224 L apart from an end of said vibrator (11).

## Patentansprüche

1. Ein Vibrationsgyroskop (10) mit folgenden Merkmalen:
einem prismenförmigen Vibrator (11);
einem piezoelektrischen Element (14, 16, 18), das auf einer Seitenfläche des Vibrators (11) gebildet ist, wobei das piezoelektrische Element (14, 16, 18) einen piezoelektrischen Körper (14a, 16a, 18a) und eine innere und eine äußere Elektrode (14b, 14c, 16b, 16c, 18b, 18c) aufweist, die auf einer inneren bzw. auf einer äußeren Hauptoberfläche des piezoelektrischen Körpers (14a, 16a, 18a) angeordnet sind;
einem Anschlußdraht (20, 22, 24), der mit dem piezoelektrischen Element (14, 16, 18) verbunden ist;
wobei das piezoelektrische Element (14, 16, 18) derart gebildet ist, daß es sich zu Abschnitten der Seitenfläche des Vibrators (11) erstreckt, die sehr nah an den Knotenpunkten des Vibrators (11) positioniert sind; und
wobei der Anschlußdraht (20, 22, 24) mit der äußeren Elektrode (14b, 16b, 18b) des piezoelektrischen Elements (14, 16, 18) neben dem Abschnitt der Seitenfläche des Vibrators (11) verbunden ist, der sehr nah an dem Knotenpunkt des Vibrators (11) positioniert ist.

2. Ein Vibrationsgyroskop (10) gemäß Anspruch 1, bei dem der Vibrator (11) in einer regelmäßigen dreieckigen Prismenform gebildet ist.

3. Ein Vibrationsgyroskop (10) gemäß Anspruch 2, bei dem unter der Annahme einer Länge des Vibrators (11) von L der Anschlußdraht an einer Position verbunden ist, die um 0,224 L von einem Ende des Vibrators (11) entfernt ist.

4. Ein Vibrationsgyroskop (10) mit folgenden Merkmalen:
einem prismenförmigen Vibrator (11), der aus einer piezoelektrischen Keramik besteht;
einer Elektrode (14b, c; 16b, c; 18b, c), die auf einer Seitenfläche des Vibrators (11) gebildet ist; und
einem Anschlußdraht (20, 22, 24), der mit der Elektrode (14b, c; 16b, c; 18b, c) verbunden ist;
wobei die Elektrode (14b, c; 16b, c; 18b, c) derart gebildet ist, daß sie sich zu Abschnitten der Seitenfläche des Vibrators (11) erstreckt, die sehr nah an den Knotenpunkten des Vibrators (11) positioniert sind; und
wobei der Anschlußdraht (20, 22, 24) mit der Elektrode (14b, c; 16b, c; 18b, c) neben dem Abschnitt der Seitenfläche des Vibrators (11) verbunden ist, der sehr nah an dem Knotenpunkt des Vibrators (11) positioniert ist.

5. Ein Vibrationsgyroskop (10) gemäß Anspruch 4, bei dem der Vibrator (11) in einer regelmäßigen dreieckigen Prismenform gebildet ist.

6. Ein Vibrationsgyroskop (10) gemäß Anspruch 5, bei dem unter der Annahme einer Länge des Vibrators (11) von L der Anschlußdraht an einer Position verbunden ist, die um 0,224 L von einem Ende des Vibrators (11) entfernt ist.

## Revendications

1. Gyroscope vibrant (10), comprenant :
un vibrateur (11) en forme de prisme,
un élément piézoélectrique (14, 16, 18) formé sur une face latérale du vibrateur (11), l'élément piézoélectrique (14, 16, 18) comprenant un corps piézoélectrique (14a, 16a, 18a) et des électrodes interne et externe (14b, 14c, 16b, 16c, 18b, 18c) placées sur une surface principale interne et une surface principale externe du corps piézoélectrique (14a, 16a, 18a) respectivement,
un fil d'alimentation (20, 22, 24) connecté à l'élément piézoélectrique (14, 16, 18),
dans lequel l'élément piézoélectrique (14, 16, 18) est formé de manière qu'il s'étende vers des parties de la surface latérale du vibrateur (11) qui sont les plus proches des points nodaux du vibrateur (11), et
le fil d'alimentation (20, 22, 24) est connecté à l'électrode externe (14b, 16b, 18b) de l'élément piézoélectrique (14, 16, 18) en position adjacente à la partie de la face latérale du vibrateur (11) qui est la plus proche du point nodal du vibrateur (11).

2. Gyroscope vibrant (10) selon la revendication 1, dans lequel le vibrateur (11) est formé à une configuration de prisme en triangle isocèle.

3. Gyroscope vibrant (10) selon la revendication 2, dans lequel, si L désigne la longueur du vibrateur (11), le fil d'alimentation est connecté à une position séparée par une distance égale à 0,224 L d'une extrémité du vibrateur (11).

4. Gyroscope vibrant (10), comprenant :
un vibrateur (11) en forme de prisme constitué d'une céramique piézoélectrique,
une électrode (14b, c ; 16b, c ; 18b, c) formée sur une face latérale du vibrateur (11), et
un fil d'alimentation (20, 22, 24) connecté à l'électrode (14b, c ; 16b, c ; 18b, c),
dans lequel l'électrode (14b, c ; 16b, c ; 18b, c) est formée de manière qu'elle rejoigne des parties de la surface latérale du vibrateur (11) qui sont les plus proches des points nodaux du vibrateur (11), et
le fil d'alimentation (20, 22, 24) est connecté à ladite électrode (14b, c ; 16b, c ; 18b, c) près de ladite partie de la face latérale du vibrateur (11) qui est la plus proche du point nodal du vibrateur (11).

5. Gyroscope vibrant (10) selon la revendication 4, dans lequel le vibrateur (11) a une forme de prisme en triangle isocèle.

6. Gyroscope vibrant (10) selon la revendication 5, dans lequel, si L désigne la longueur du vibrateur (11), le fil d'alimentation est connecté à une position séparée par une distance égale à 0,224 L d'une extrémité du vibrateur (11).
